(19) Europäisches Patentamt / European Patent Office / Office européen des brevets

(11) **EP 2 447 912 B1**

(12) **EUROPEAN PATENT SPECIFICATION**

(45) Date of publication and mention
of the grant of the patent:
**08.03.2017 Bulletin 2017/10**

(51) Int Cl.:
***G06T 7/20*** (2017.01)

(21) Application number: **10382281.3**

(22) Date of filing: **27.10.2010**

(54) **Method and device for the detection of change in illumination for vision systems**

Verfahren und Vorrichtung zur Erfassung einer Veränderung der Beleuchtung für Sichtsysteme

Procédé et dispositif pour la détection d'un changement d'éclairage pour des systèmes de vision

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.05.2012 Bulletin 2012/18**

(73) Proprietor: **Vaelsys Formacion y Desarrollo, S.L.
28043 Madrid (ES)**

(72) Inventors:
• **Rodríguez González, Sara
E-28043 Madrid (ES)**
• **Sánchez Montañes, Manuel
E-28043 Madrid (ES)**
• **Lago Fernández, Luis Fernando
E-28043 Madrid (ES)**
• **Cermeño Mediavilla, Eduardo
E-28043 Madrid (ES)**
• **Pérez Fernández, Ana
E-28043 Madrid (ES)**
• **López Font, Rafael
E-28043 Madrid (ES)**

(74) Representative: **ABG Patentes, S.L.
Avenida de Burgos, 16D
Edificio Euromor
28036 Madrid (ES)**

(56) References cited:
**US-A1- 2004 228 530**

• **ANDREW MILLER ET AL: "Person and Vehicle Tracking in Surveillance Video", 8 May 2007 (2007-05-08), MULTIMODAL TECHNOLOGIES FOR PERCEPTION OF HUMANS; [LECTURE NOTES IN COMPUTER SCIENCE], SPRINGER BERLIN HEIDELBERG, BERLIN, HEIDELBERG, PAGE(S) 174 - 178, XP019089316, ISBN: 978-3-540-68584-5 * the whole document ***
• **TATSUYA TANAKA ET AL: "Object Detection under Varying Illumination Based on Adaptive Background Modeling Considering Spatial Locality", 13 January 2009 (2009-01-13), LECTURE NOTES IN COMPUTER SCIENCE; VOL. 5414; PROCEEDINGS OF THE 3RD PACIFIC RIM SYMPOSIUM ON ADVANCES IN IMAGE AND VIDEO TECHNOLOGY, SPRINGER BERLIN HEIDELBERG, BERLIN, HEIDELBERG, PAGE(S) 645 - 656, XP019114272, ISBN: 978-3-540-92956-7 * page 645, paragraph 1 - page 652, line 2 ***
• **JAVED O ET AL: "Tracking and object classification for automated surveillance", EUROPEAN CONFERENCE ON COMPUTER VISION, BERLIN, DE, 1 January 2002 (2002-01-01), pages 343-357, XP002243848,**
• **MOHD ASYRAF ZULKIFLEY ET AL: "Enhancement of robust foreground detection through masked greyworld and color co-occurrence approach", COMPUTER SCIENCE AND INFORMATION TECHNOLOGY (ICCSIT), 2010 3RD IEEE INTERNATIONAL CONFERENCE ON, IEEE, PISCATAWAY, NJ, USA, 9 July 2010 (2010-07-09), pages 131-136, XP031748595, ISBN: 978-1-4244-5537-9**

EP 2 447 912 B1

**Description**

Object of the Invention

The present invention relates to method and a device for detecting the change in illumination which can be used in those applications in which it is of interest to detect a change in illumination such as vision systems. This method and device which are described in this invention allow detecting these changes in outdoor and indoor enclosures, enabling applications ranging from the regulation of consumption in electric devices to detecting the presence of trespassers.

Background of the Invention

The invention is comprised within the techniques for analysing digital images, and especially, digital video. A general reference in which specific techniques can be found is *"Digital Image Processing"*, by Rafael C. Gonzalez, Richard E. Woods. Pearson Prentice Hall. Third Edition 2008 (Pearson Education, Inc.). In this sense, the starting point is a definition of digital image which is understood as the projection of a visible object on an image acquisition means, the latter generally being a camera provided with a CCD sensor. This projection of the object essentially reflects the light energy distribution which varies over time on the sensor of the acquisition means. In order to give rise to a digital image, this light energy distribution is spatially and temporally sampled.

The temporal sampling is related to the generally regular intervals at which this image is acquired, at a time $t_1$, $t_2$,... the image acquisition time being less than the time interval between sampling times, giving rise to a single image of each sampling at time $t_1$, $t_2$,....

The spatial sampling gives rise to a set of image elements or pixels. The characteristics of the spatial sampling depend on the geometric arrangement of the sensor elements. It is generally carried out on a plane in which there is a set of $N$ sensors generally arranged in a rectangular array of dimensions $m \times n = N$, giving rise to a discrete representation of size $N$. The resolution is defined depending on the ratio between the number of sensors and the physical size of the array of sensors, these sensors generally being equispaced. Thus, a digital image is usually described by a matrix of numbers $I_{uv}$, $u=1,...,m$; $v=1,...,n$; for each pixel each matrix element with indices being associated with a pixel coordinate $r_i$, $i=1, ... , N$ or pixel direction, representing the real position of the sampling on the sensor. In the aforementioned case, the characteristics of the image sampled at a time t are set based on the resolution and the number of sensors. Although this representation in a rectangular array is the most usual one, it is not necessary for the purpose of this invention to be limited to a rectangular representation, but rather it would be enough to define the coordinates of each sensor and the association of an index with the real position of the sensor.

Finally, each light distribution value is digitised, usually giving rise to an integer value. The information of the image depends on the type of number used to represent it, or pixel value. The pixel values are usually defined by their depth (i.e., number of bits) and by the representation used (greyscale, RGB colour model, HSB colour model, CMYK colour model, etc.).

There are currently various systems which use a digital image representation, such as the vision systems based on video analysis, which allow detecting events based on the variation of the pixel values in a video. The events which cause these variations in the pixel values include changes in illumination, which correspond to changes associated with variations of the light source, such as the evolution of sunlight during the day or a variation of an artificial light source for example. However, it is not possible to find in the state of the art methods or devices which allow distinguishing variations of pixel value associated with a change in illumination from other variations such as those variations caused by the introduction of a new object, such as a mobile object which can be a passing car for example.

The detection of changes between digital images is a process present in the state of the art for video analysis. This process allows extracting from the comparison between digital images the new elements on those elements which would be static, such as the floor or the walls of a building, which make up the scene of the video.

However, the detection of changes in illumination is usually the main problem of the proposals present in the state of the art since they do not manage to eliminate the variations caused by the changes in illumination in the images acquired by a camera.

The proposals present in the state of the art to deal with this problem are based on incorporating these variations to an internal representation which attempts to model those static parts of a scene by means of a so-called "background model". In the state of the art there is a variety of works which allow implementing background models by means of various techniques, such as for example:

- the mixture of Gaussian distributions (see C. Stauffer, and W. Grimson, "Adaptive Background Mixture Models for Real-Time Tracking" IEEE Conference on Computer Vision and Pattern Recognition, vol. 2, 1999; and Ying-Li Tian, Max Lu, and Arun Hampapur, "Robust and Efficient Foreground Analysis for Real-time Video Surveillance", pp. 1182-1187, IEEE Computer Society Conference On Computer Vision And Pattern Recognition, VOL. 1, 2005),

- the analysis of the information extracted from the gradient of the image (see B. Klare, S. Sarkar, "Background subtraction in varying illuminations using an ensemble based on an enlarged feature set," pp. 66-73, 2009 IEEE Computer Society Conference on Computer Vision and Pattern Recognition Workshops, 2009), or
- the analysis of the background texture (see Omar Javed, Khurram Shafique, Mubarak Shah, "A Hierarchical Approach to Robust Background Subtraction using Color and Gradient Information" pp. 22-27, Workshop on Motion and Video Computing (MOTION'02), 2002).

It is therefore possible to obtain a background model, it furthermore being possible to obtain it for different representations such as a RGB colour model or a colour model in greyscale.

Although some changes in illumination can be eliminated using these background models, the results of these proposals when set against another group of changes which cannot be modelled present problems. These changes include variations due to changes in illumination, which comprise not only the light variation on an outdoor scene due to sunlight, but those variations such as a passing cloud or changes in an indoor scene due to turning on or turning off an electric source. These proposals thus do not give a reliable result when they are set against those changes in illumination which are not capable of being incorporated in a background model.

The proposals present in the state of the art attempt to eliminate the effects caused by changes in illumination in order to extract the elements which have changed in each moment of a video sequence as precisely as possible.

"Person and Vehicle Tracking in Surveillance Video" (A. Miller et al.), LNCS 4625, pp 174-178, 2008, describes a method to detect the occurrence of a global illumination change and temporarily increase a learning rate so that the system recovers quickly once the scene reaches a new steady state. A linear regression of intensity is performed for each pixel over a temporal window of 20 frames and the sum is thresholded to trigger a temporary increase in the learning rate.

"Object Detection under Varying Illumination Based on Adaptive Background Modeling Considering Spatial Locality" (T. Tanaka et al.), PSIVT 2009, LNCS 5414, pp. 645-656, 2009, describes a method for background modeling which combines the probability density function approach to approximate a background model and detect the foreground and the Radial Reach Filter approach to refine the detected foreground.

US 2004/0228530 A1 describes a method and system for foreground segmentation in which frames of a video sequence are analyzed in the transform domain to determine one or more features subsequently used to model the background.

The present invention faces the problem of performing a detection of changes in illumination which allows a reliable and advanced control of the illumination of any room or outdoor enclosure or indoor enclosure. Other problems solved by the invention resolves are described in the embodiments.

Description of the Invention

The object of the invention is to provide a method and a device for vision systems which allow the detection of changes in illumination. The method of the invention is defined by independent claim 1 and the device by independent claim 11. Said claims are incorporated to the present description by reference.

In a first inventive aspect, a method for carrying out the detection of changes in illumination between at least two digital representations of images on one and the same region of study is provided. This region of study is a region of space on which images are acquired as a result of an image acquisition means such as a camera with a CCD. Based on the information during the acquisition on this region of space, the change in illumination is detected using the method which is defined below:

"Method for the detection of changes in illumination for vision systems between
a detection image of a region of study acquired at a detection time t and a background model image of said region of study, wherein the detection image comprises a first set of pixels and the background model image comprises a second set of pixels,
said first set of pixels and said second set of pixels sharing one and the same set of N pixel coordinates, and
a single pixel value of the first set of pixel values and a single pixel value of the second set of pixel values being associated with each pixel coordinate of the set of pixel coordinates
said method comprising the provision of an acceptance threshold value of the change in illumination"

The detection image corresponds to an image of the region of study acquired at a detection time instant t which corresponds to the time at which its capture has been carried out. Hereinafter, the acquisition time will be referred to by means of the expression detection image at time t (of detection). The detection image is defined by means of a digital representation comprising N pixels of a first set of pixels. The pixels of the first set of pixels are arranged in the image positions according to coordinates (r1,...,rN), according to any representation of a system of coordinates (r1,...,rN), such as by means of the positions (x1,y1),...,(xN,yN) for example or, simply, the indices (i,j) of a matrix of dimensions m × n = N. These pixel values are defined according to the colour model, such as the RGB model or a greyscale model.

The background model image corresponds to an image of the region of study which reflects the temporal evolution of the region of study at an instant prior to the detection time instant t. This background model image is created according to the processes present in the state of the art of background modelling such as those mentioned in the background of the invention (see for example Ahmed M. Elgammal, David Harwood, and Larry S. Davis, "Non-parametric model for Background Subtraction" in Proceedings of the 6th European Conference in Computer Vision-Part II, pp. 751-767, Springer-Verlag , 2000.; Cheung, S. C. and Kamath C. "Robust Techniques for Background Subtraction in Urban Traffic Video" in Video Communications and Image processing, SPIE Electronic Imaging, San Jose 2004). This background model image is preferably obtained based on an ordered temporal sequence of images of the region of study acquired between an initial time $t_0$ and a time immediately prior to the detection time instant $t$. This background image is usually created based on a set of images or frames acquired in a video. Like the detection image, the background model image comprises a digital representation by means of a second set of $N$ pixels. This second set of pixels corresponds to the same colour model used for the detection image and are in the same coordinates as the first set of pixels.

Thus, a pixel value of the first set of pixel values of the detection image and a pixel value of the second set of pixel values of the background model image is associated with each element of the set of pixel coordinates ri, i=1, ... , N,.

The method for detecting whether a change in illumination in this detection image further comprises the provision of an acceptance threshold value of the change in illumination. This threshold value is determined depending on the typical illumination of the region of study at the detection time t, which is determined by several parameters such as if the image reflects a time of the day or night, the time of day, or the history of the average illumination value or values obtained by a study of the variation of the illumination during the day.

Next, the following sequence of steps is carried out:

"selecting a region segmented by means of digital image segmentation techniques between the detection image and the background model image;"
By means of the segmentation techniques present in the state of the art it is possible to isolate a segmented region which reflects a change with respect to the background model image. This selection of a segmented region is defined by a subset of positions which allow isolating and grouping pixels of the detection image. This region is not necessarily formed by a single domain as a pixel mass but rather they can be of different domains or pixel masses, being grouped until a segmented region is given.
"determining a correlation value based on the pixel value of the detection image and the pixel value of the background model image corresponding to one and the same pixel coordinate which belongs to the segmented region;
in the event that the correlation value is greater than the acceptance threshold value, it is detected that a change in illumination has occurred in the detection image."

The correlation is found between the pixel value of the detection image and the value of a pixel of the background model image which correspond to one and the same position, i.e., they share one and the same coordinate. This restriction at a local level allows distinguishing the area where the objects represented by the image are in the same place and detecting the illumination effects more efficiently with respect to those changes caused by mobile objects.

In other words, this method does not attempt to eliminate the effects caused by the changes in illumination by incorporating them to the background model as is done in the proposals present in the state of the art. In contrast, does attempts to identify them and distinguish them from other changes which may occur in the detection image. This is furthermore more advantageous when detecting other changes such as the changes caused by moving objects.

In a second inventive aspect, a device is provided which comprises

-    image input means
-    data processing means
-    data storage means

wherein the processing means are configured to carry out the method according to the first inventive aspect.

Other additional advantages and aspects are shown in the embodiments of the invention which are described below.

Description of the Drawings

These and other features and advantages of the invention will be more clearly shown from the following detailed description of a preferred embodiment, given solely as an illustrative and non limitative example, with reference to the attached figures.

Figure 1 shows a schematic diagram of an embodiment of the method of the invention.
Figure 2a shows different images which illustrate the steps of the method according to an embodiment.
Figure 2b shows different images which illustrate the steps of the method according to an embodiment.
Figure 3 shows a schematic diagram of the architecture of an embodiment of the method.
Figure 4 shows a schematic diagram of a system for the detection of changes on a scene.

Detailed Description of the Invention

An embodiment of the method of the invention is described below. In this example, a video is acquired on one and the same region of space which is referred to as the region of study by means of an image acquisition means. In the present example, the image acquisition means is a digital camera provided with a CCD sensor. This camera maintains the region of study focused during a time interval in which said video is acquired.

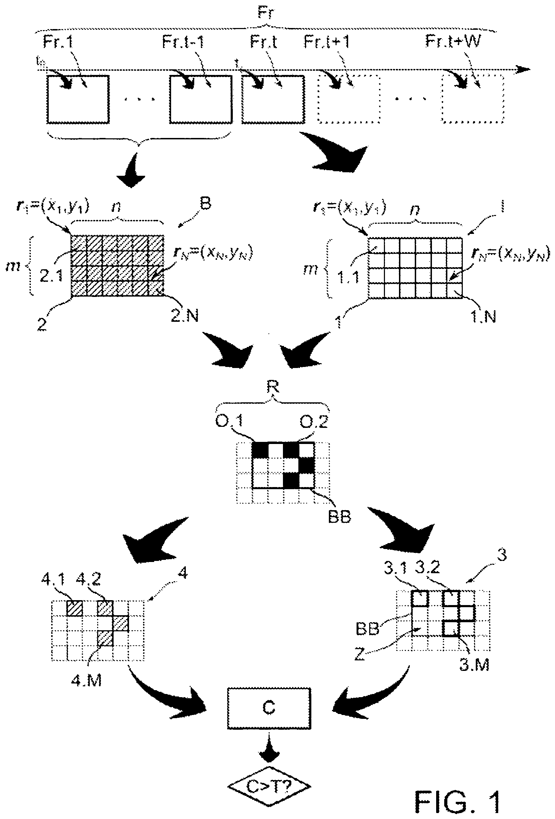

Figure 1 schematically shows the steps of the method and this video is depicted as an input sequence of images (Fr), designated by the term frame, and which is temporally ordered (Fr.1,..., Fr.t,...).

In the present embodiment, the images are defined by a matrix of m rows and n columns with a pixel format of 8 bits in depth corresponding to a greyscale model which corresponds to the most usual convention in the state of the art for labelling the pixels starting with the top left-hand corner to the bottom right-hand corner. It is possible to use any colour model described in the state of the art such as RGB, HSV, CMYK etc. The present embodiment is described for an image represented in greyscale, although it is applicable to any digital image based on a colour model. Although this greyscale model is generally used on night time images, it is possible to generalise it to an RGB model, or to a channel of an RGB model, to any combination of the channels of the RGB model. The detection based on the RGB colour model is preferably used for daytime images.

In reference to Figure 1 , the image -or frame- (Fr.t) taken at a time $t$ is used as a detection image (I). The background model image (B) is calculated by means of the methods present in the state of the art based on the sequence of video images obtained until time t. In this embodiment, the background model includes obtaining the i-th pixel value (2.i) by means of a running average filter which uses a weighted average between the background image for a previous time based on the previous frames (Fr.1-Fr.t-1) and the frame acquired at time t (Fr.t). The weight of each of the terms within this weighted average is chosen depending on the importance to be given to the update of the background model by means of a coefficient known as the update factor. In order to prevent this background model from being easily corrupted and in order for it to be updated, an update factor of substantially 0.01 is chosen in this example, which is advantageous for preventing the corruption of the background model.

Other methods for finding the background model image (B) such as those which obtain the background image by means of:

- The average value of the pixel values;
- A parametric model such as the one which determines the pixel value of the background image by means of a mixture of Gaussian distributions (known as MoG: Mixture of Gaussians);
- A non-parametric model which comprises using a probability density function based on a random variable;

or any combination between these methods and/or the running average filter is possible, each with a different computational cost according to the needs of the specific implementation.

Together with the above, an acceptance threshold value (T) is provided. This acceptance threshold value (T) depends on the illumination conditions, reflecting the differences between the intensity values for images in cases of outdoor, indoor, night time, daytime images. In a particular embodiment this value can be refined using adaptive techniques on one and the same region of study depending on several parameters such as the season of the year, the time of day or the luminance registered by a sensor.

In order to find the segmented region (R), it is possible to use any combination of the segmentation methods present in the state of the art. These segmentation techniques include those methods which allow obtaining a point or region of space which is darker or lighter than the rest of the image. Hereinafter, the term blob (Binary Large OBject) will be used, the meaning of which in the context of image processing techniques refers to a pixel mass which does not have a specific shape. Thus, by means of these segmentation techniques, a segmented region (R) containing one or several objects (O) is provided. These techniques include combinations of methods based on finding ends in the pixel values or differences between pixel values. In Figure 1, the pixels of the detection image (I) which correspond to the segmented region (R) form a first subset(3) of $M$ pixels in the detection image (I) with values (3.1,..., 3.M). The pixels of the background model image (B) which correspond to the segmented region (R) form a second subset (4) of $M$ pixels in the background model image (B) with values (4.1,..., 4.M).

Next, a correlation value (C) between the pixels of the first subset of pixels (3) in this segmented region (R) which belong to the detection image (I) and the pixels of the second subset of pixels (4) of the segmented region (R) which belong to the background model image (B) is calculated. In the present embodiment (C) is calculated based on the correlation coefficient between two pixel values with the same position. In the event that the correlation value (C) is greater than the acceptance threshold (T), this change in this segmented region is accepted as a change in illumination.

This correlation value (C) is preferably defined in a normalised form adopting values between -1 and 1. In indoor environments, it is advantageous to select an acceptance threshold value (T) close to zero. When the acceptance threshold value (T) is set for a correlation in 0.3, it is possible to obtain a correct detection on a region of study in daytime environmental conditions with a 90% success rate. More advantageously, when the acceptance threshold (T) is set at 0.7, it provides a detection with a 100% effectiveness in daytime outdoor environments. These detections by the present method obtain a much higher success rate than that of the methods present in the state of the art. Although those ways of calculating the correlation between the detection image (I) and the background model image (B) present in the state of the art are considered as included in the present application, an advantageous way of obtaining a correlation value (C) is carried out based on the calculation of the correlation coefficient R for each point of the segmented region $\mathbf{r}_k$, $k$ =1,..., $M$ as:

$$R = 1 - \frac{\sum_{k=1}^{M}[I(\mathbf{r}_k) - \bar{I}][B(\mathbf{r}_k) - \bar{B}]}{\sqrt{\sum_{k=1}^{M}[I(\mathbf{r}_k) - \bar{I}]^2 \sum_{k=1}^{M}[B(\mathbf{r}_k) - \bar{B}]^2}}$$

wherein

$I(\mathrm{r}_k)$ is the pixel value (3.k) of the detection image ($I$) for each position $\mathrm{r}_k$ in the segmented region (R);
$\bar{I}$ is the average pixel value in the detection image ($I$);
$B(\mathrm{r}_k)$ is the pixel value (4.k) of the background model image (B) for each position $\mathrm{r}_k$ in the segmented region (R); and
$\bar{B}$ is the average pixel value in the background model image (B).

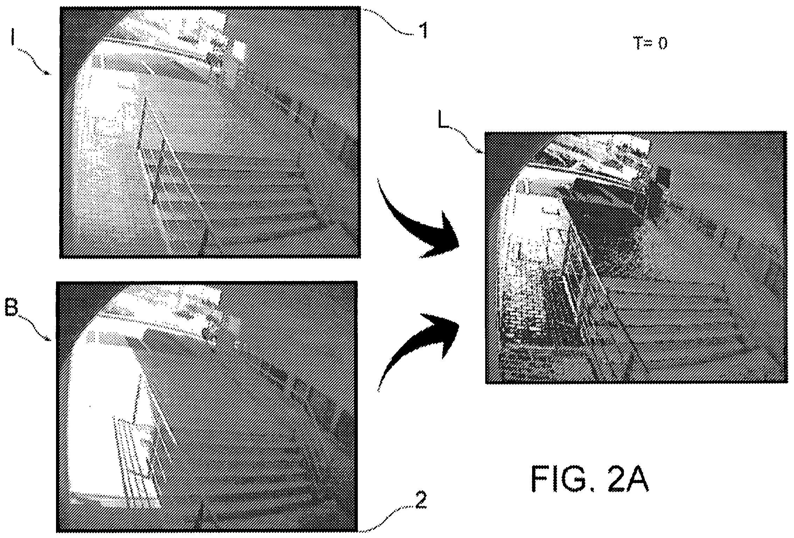

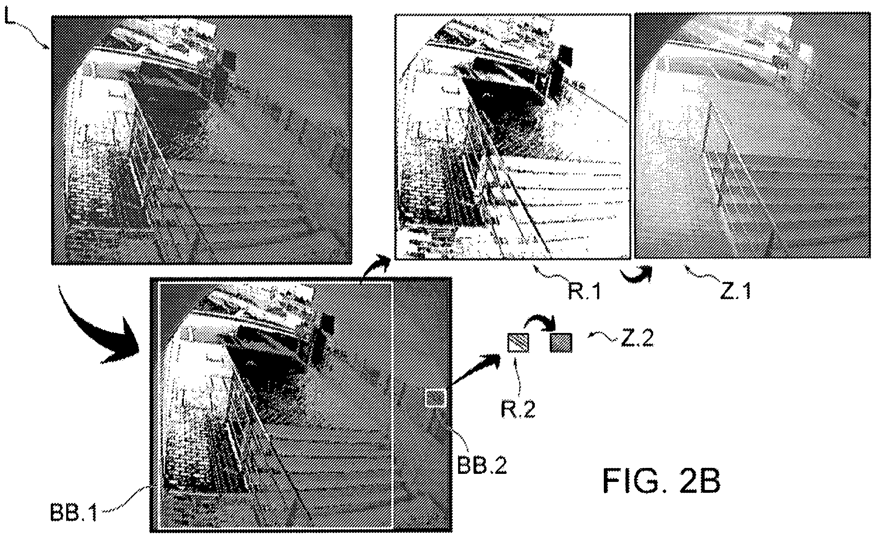

In reference to the embodiment which is shown in Figures 2A and 2B, it is based on a detection image (I) and a background model image (B) together with an acceptance threshold (T) which is zero in the present example for a daytime image.

Firstly, the segmentation to find the segmented region (R) is carried out by means of a sequence comprising the following steps. In a first step a foreground image, not shown, is created based on the differences between the detection image (I) and the background model image (B).

In this example, the absolute difference, *i.e.* the absolute value of the difference between the i-th pixel value (1.i) of the detection image (I) and the i-th pixel value (2.i) of the background model image (B), is calculated. This calculation has advantages as it is simple and provides more solid-looking objects. A subtraction image (D) is performed depending on whether the result of this operation is greater or less than a threshold of the absolute difference. This threshold of the absolute difference is set depending on the illumination conditions of the region of study and the sensitivity of the acquisition means, which can be refined by means of a calibration by an adaptative method for eliminating noise.

Next, a labelling is performed, i.e., a region of the image is marked for the subsequent analysis thereof according to the labelling methods present in the state of the art. Particularly, in this embodiment, the selection of the coordinates of those pixels with an absolute value of the difference substantially different from zero, is implemented. In this embodiment, this process gives rise to a labelling image (L) in which the region labelled with black pixels is seen more clearly in Figure 2B.

In a following step of the present embodiment, those labelled pixels are merged to form a plurality of objects by means of the merging techniques present in the state of the art. These merging techniques allow obtaining different sized objects depending on the application.

Next, in order to carry out the grouping of at least one object (O) to give rise to a segmented region (R), the pixel masses of the objects are grouped to give rise to blobs. The segmented region (R) consists of the coordinates of the pixels which are in each blob. Figure 2B shows the grouping image (G) on which two blobs framed in two white boxes (BB.1, BB.2) indicating the so-called bounding box are shown. The first blob has a segmented region (R.1) represented in Figure 2B in which the positions of the pixels of the segmented region (R.1) of the first blob have been marked in black. The pixels of the detection image (I) inside the bounding box (BB.1) of the first blob form the truncated image (Z.1) on the detection image (I) of the first blob. The second segmented region (R.2) of the second blob is also shown, where the positions of the pixels of the segmented region (R.2) of the second blob have also been marked in black. The pixels of the detection image (I) inside the bounding box (BB.2) of the second blob form the truncated image (Z.2) on the detection image (I) of the second *blob*

It is furthermore possible to obtain a truncated image on the detection image (not shown). In this case, the pixels of the background model image (B) inside the bounding box (BB.1) of the first blob form part of the truncated image of the first blob. The pixels of the background model image (B) inside the bounding box (BB.2) of the second blob in turn form part of the truncated image of the second blob.

The correlation coefficient (C.1) is calculated for the segmented region (R.1) of the first blob as described above. The correlation coefficient (C.2) is calculated in the same way for the segmented region of the second blob (R.2). A comparison with the acceptance threshold value (T) of the correlation coefficients (C.1, C.2) allows identifying that these changes correspond to a change in illumination since both correlation coefficients (C.1, C.2) are positive and the acceptance threshold (T) for this daytime image is zero.

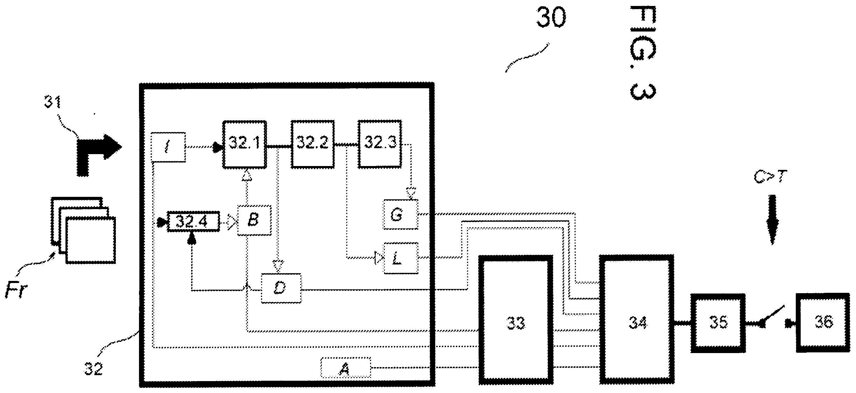

A more detailed description of how to carry out the invention is provided with reference to Figure 3, which provides an architecture (30) complementing the present embodiment. This architecture (30) comprises modules which represent the previous methods and additional modules which can be applied on any combination of the technical teachings set forth above. These modules can be implemented as parts of a program suitable to program a programming means.

In particular, a sequence of images (Fr) is illustrated by means of a main module (32) the input (31) of which is fed. One of these images (Fr) is the detection image (I). The detection image (I) is introduced into a subtraction module (32.1) and an update module (32.4) of the background model image (B). This detection image (I) and the background model image (B) are introduced into the subtraction module (32.1) at the output of which the subtraction image (D) is obtained. The output of the subtraction module (32.1) is introduced into the labelling module (32.2) at the output of which a labelling image (L) is obtained. This output of the labelling module (32.2) is connected to a grouping module (32.3), at the output of which a grouping image (G) is obtained. The grouping (G), labelling (L) and subtraction (D) images are in turn introduced into the calculation module of dependencies (34). This dependency calculation module (34) is in turn connected to an image processing module (33) for low illumination conditions and the methods for carrying out the correlation calculation are developed in this dependency calculation module (34), for example through the expression for Digital Image Cross Correlation (DICC).

The parameters of these blobs are stored in a data file (A), which is located in the main module (32) in this example. The correction of images for low illumination conditions preferably comprises a change of scale so that the pixel values (3) of the detection image (I) are higher, which allows a better detection in images acquired in low illumination conditions such as night time images. On monochrome images or on each RGB channel, this correction for pixel value (3.i) follows a cubic law which results in an advantageous correction since it increases the success rate percentage.

Other methods consist of correcting the pixel values of any of the images depending on the illumination gradient of said image by means of the subtraction of the illumination plane, the illumination plane being the linear adjustment of the illumination gradient. This correction can be carried out on different combinations of images and regions of images such as:

- the detection image (I);
- the background model image (B);
- the truncated image (Z) on the detection image (I);
- the truncated image on the background model image (B) which respectively give rise to different illumination planes
- an illumination plane of the detection image (I);
- an illumination plane of the background image (B); and
- an illumination plane of the truncated image (Z) on the detection image (I)
- an illumination plane of the truncated image on the background model image (B).

When the different combinations of these planes are subtracted from their respective images they result in different variants which are advantageous for the detection of low illumination conditions. In particular, the subtraction of the illumination plane of the truncated image (Z) is especially advantageous for obtaining a correction which allows increasing the success rate percentage. The information compiled and processed by the main module (32) and the image processing module (33) for low illumination conditions is incorporated into a calculation module (34) to give rise to the correlation value (C).

Together with the above, a guard module (35) is incorporated into the architecture to take into account the evolution of the detection during a guard time, capable of being incorporated on any combination of the previous teachings. With this module, a method is represented which comprises the analysis of a plurality of images (Fr.t+1,...,Fr.W) subsequent to the detection image (I) acquired at detection time t once a change in illumination has been detected on the detection image (I). The method, once the detection of the change in illumination on the detection image (I) at detection time t has been carried out, additionally comprises performing the following steps:

- providing a guard time;

- acquiring a plurality of images (Fr.t+1,...,Fr.W) subsequent to the detection image (I) at detection time t during the guard time;
- carrying out the detection of change in illumination according to any variant of the previous embodiment in each of the plurality of images (Fr.t+1,...,Fr.W) subsequent to the detection image (I) acquired at detection time t;
- rejecting the detection of the change in illumination at detection time t as change in illumination, in the event of the detection of the change in illumination not being maintained in a majority of the plurality of images (Fr.t+1,...,Fr.W) subsequent to the detection image (I) at detection time *t*.

In the present example, it is considered that $W$ images have been acquired after the detection of the change in illumination during the guard time. When performing the same process on the images it is detected whether the change in illumination at detection time $t$ is maintained in the $W$ subsequent images. If the correlation does not exceed the acceptance threshold (T) when a majority of the $W$ cases are analysed after the detection of the change in illumination then the change will not be accepted as change in illumination. Particularly, it is considered that there is a majority when at least the detection of a change in illumination occurs in more than half of the subsequent images (Fr.t+1,...,Fr.W). The parameter of the guard time (or, equivalently the number of subsequent images, $W$) is based on the rate of images acquired (number of images per unit of time) which allows eliminating unwanted effects from sensor changes.

When the previous methods are applied to a system applied to the generation of events related to a change in a video sequence, such as those which are used in the vision systems and particularly in video surveillance, are especially useful because by means of these methods false alarms which are associated with changes in illumination are prevented. This effectiveness improves the present results by applying automatic methods for the detection of movement.

A device suitable for vision systems is also provided which comprises:

- image input means;
- data processing means; and
- data storage means,

wherein the processing means are configured to carry out the method according to any one of the previous technical teachings.

This device can additionally incorporate a communications interface which allows it to exchange information and commands with an external device. In the present embodiment the method further comprises an image acquisition means. When this device is integrated into a video surveillance system incorporating alarm means, it allows carrying out a detection on the region of study which prevents false alarms due to changes in illumination.

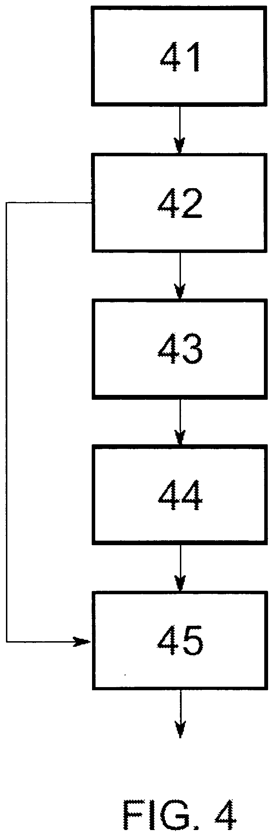

Figure 4 shows a diagram of an architecture is shown for a system for the detection of changes adapted for implementing the method applied to the generation of alarms.

A camera acts as acquisition means (41) and the video sequence which is supplied the video sequence of the acquisition means (41). This system is implemented by means of an area definition module (42) in which the parameters for defining the areas of interest for the recognition are located, demarcating an area of recognition in the region of study.

These images are inserted into a module (43) in which the characteristics of the image are extracted and then into a recognition module (44) which allows the recognition of changes such as a change in illumination by means of a plurality of architectures implementing the previous technical teachings. The result of this recognition module (44) feeds an alarm validation system (45) which allows informing other equipment of a valid alarm in which those changes caused by the changes in illumination are corrected.

## Claims

1. A method for the detection of changes in illumination for vision systems between a detection image (I) of a region of study acquired at a detection time $t$, and a background model image (B) of said region of study, the background model image (B) reflecting the temporal evolution of the region of study at an instant prior to detection time $t$,
   wherein the detection image (I) comprises a first set of pixels (1) and the background model image (B) comprises a second set of pixels (2),
   said first set of pixels (1) and said second set of pixels (2) sharing one and the same set of $N$ pixel coordinates ($\mathbf{r}_1,..., \mathbf{r}_N$), and
   a single pixel value of the first set of pixel values (1) and a single pixel value of the second set of pixel values (2) being associated with each pixel coordinate ($\mathbf{r}_i$) of the set of pixel coordinates ($\mathbf{r}_1,...,\mathbf{r}_N$),
   said method comprising the provision of an acceptance threshold value (T) of the change in illumination, the acceptance threshold value depending on the illumination conditions of the region of study, and **characterized in that** the method comprises the following sequence of steps:

- selecting a region (R) segmented by means of digital image segmentation techniques between the detection image (I) and the background model image (B), the segmented region (R) reflecting a change with respect to the background model;
- determining a correlation value (C) between the pixels in the segmented region (R) which belong to the detection image (I) and the pixels in the segmented region (R) which belong to the background model image (B), based on the pixel value (1.i) of the detection image (I) and the pixel value (2.i) of the background model image (B) corresponding to one and the same pixel coordinate which belongs to the segmented region (R);
- in the event that the correlation value (C) is greater than the acceptance threshold value (T), it is detected that a change in illumination has occurred in the detection image (I).

2. The method according to claim 1, wherein the selection of the segmented region (R) comprises the steps of:

- creating a foreground image based on the value of the difference between each pixel value (1) of the detection image (I) and each pixel value (2) of the background mode image (B);
- labelling those pixels of the detection image (I) which are within the foreground image;
- forming at least one object (O) by means of merging techniques; and
- grouping at least one object (O) to give rise to a segmented region (R).

3. The method according to claim 1 or 2, wherein the pixel value (1.1,...,1.N) of the detection image (I) and the pixel value (2.1,..., 2.N) of the background model image (B) is given by a colour model in greyscale.

4. The method according to any of claims 1 to 3, wherein the pixel value (1.1,...,1.N) of the detection image (I) and the pixel value (2.1,..., 2.N) of the background model image (B) is given by an RGB colour model with three components for each pixel.

5. The method according to any of claims 1 to 4, wherein the acceptance threshold value (T) of the change in illumination associated with the change in light is zero.

6. The method according to any of claims 1 to 5, wherein the acceptance threshold value (T) of the change in illumination associated with the change in light is 0.7.

7. The method according to any of claims 1 to 6, wherein in a previous step the detection image (I) is subjected to a change of scale which increases the pixel values with a higher intensity value.

8. The method according to claim 7, wherein the change of scale which increases the pixel values with a higher intensity value follows a cubic dependence with the pixel value.

9. The method according to any of claims 1 to 8, wherein it is corrected by means of subtraction on all the pixel values of any combination of the following images:

- the detection image (I);
- the background model image (B);
- the truncated image (Z) on the detection image (I);
- the truncated image on the background model image (B) ;

of a correction which corresponds to the pixel value of any of the following images:

- the illumination plane of the detection image (I); or
- the illumination plane of the background image (B);
or
- the illumination plane of the truncated image (Z) on the detection image (I); or
- the illumination plane of the truncated image on the background model image (B).

10. The method for detection according to any of claims 1 to 9, wherein in the event of a change in illumination being detected on the detection image (I) at detection time t, it additionally comprises performing the following steps:

- providing a guard time;
- acquiring a plurality of images (Fr.t+1,...,Fr.W) subsequent to the detection image (I) at detection time t during the guard time;
- carrying out the detection of change in illumination according to any of claims 1 to 10 in each of the plurality of images (Fr.t+1,...,Fr.W) subsequent to the detection image (I) acquired at detection time *t*;
- rejecting the detection of the change in illumination at detection time t as change in illumination, in the event of the detection of the change in illumination not being maintained in a majority of the plurality of images (Fr.t+1,...,Fr.W) subsequent to the detection image (I) at detection time *t*.

11. A device for vision systems which comprises:

- image input means;
- data processing means; and
- data storage means;

wherein the processing means are configured to carry out the method according to any one of claims 1 to 10.

12. The device according to claim 11, comprising image data interface means for carrying out a communication of the detection of a change in light in the detection image (I).

13. The device according to claim 11, comprising image acquisition means (41).

14. A video surveillance system comprising a device according to claims 11 or 12 and alarm means.

**Patentansprüche**

1. Verfahren zur Detektion von Beleuchtungsänderungen für bildgebende Systeme zwischen einer Aufnahme (I) eines Beobachtungsbereichs aufgenommen zu einem Aufnahmezeitpunkt t und einem Hintergrundbild (B) dieses Beobachtungsbereichs, wobei das Hintergrundbild (B) die zeitliche Entwicklung des Beobachtungsbereichs zu einem dem Aufnahmezeitpunkt t vorausgehenden Zeitpunkt wiedergibt, wobei die Aufnahme (I) einen ersten Satz Pixel (1) aufweist und das Hintergrundbild (B) einen zweiten Satz Pixel (2) aufweist, der erste Satz Pixel (1) und der zweite Satz Pixel (2) denselben Satz von N Pixelkoordinaten $(r_1, ..., r_N)$ teilen, und jeder Pixelkoordinate $(r_i)$ des Satzes von Pixelkoordinaten $(r_1, ..., r_N)$ ein einzelner Pixelwert des ersten Satzes von Pixelwerten (1) und ein einzelner Pixelwert des zweiten Satzes von Pixelwerten (2) zugeordnet ist, wobei das Verfahren das Bereitstellen eines Akzeptanzgrenzwerts (T) für die Beleuchtungsänderung umfasst, wobei der Akzeptanzgrenzwert von den Beleuchtungsbedingungen des Beobachtungsbereichs abhängt, **dadurch gekennzeichnet, dass** das Verfahren die folgende Reihe von Verfahrensschritten umfasst:

- Auswählen eines Bereichs (R) mittels eines Digitalbildsegmentierungsverfahrens zwischen der Aufnahme (I) und dem Hintergrundbild (B), wobei der segmentierte Bereich (R) eine Änderung in Bezug auf das Hintergrundbild wiedergibt;
- Bestimmen eines Korrelationswerts (C) zwischen den zu der Aufnahme (I) gehörenden Pixeln des segmentierten Bereichs (R) und den zu dem Hintergrundbild (B) gehörenden Pixeln des segmentierten Bereichs (R) basierend auf dem Pixelwert (1.i) der Aufnahme (I) und dem Pixelwert (2.i) des Hintergrundbilds (B), wobei der Pixelwert (1.i) der Aufnahme (I) und der Pixelwert (2.i) des Hintergrundbilds (B) derselben Pixelkoordinate des segmentierten Bereichs (R) zugeordnet sind;
- in dem Fall, dass der Korrelationswert (C) größer als der Akzeptanzgrenzwert (T) ist, ist das Auftreten einer Beleuchtungsänderung in der Aufnahme (I) detektiert worden.

2. Verfahren nach Anspruch 1, **dadurch gekennzeichnet, dass** die Auswahl des segmentierten Bereichs (R) folgende Verfahrensschritte umfasst:

- Erzeugen eines Vordergrundbilds basierend auf dem Wert der Differenz zwischen jedem Pixelwert (1) der Aufnahme (I) und jedem Pixelwert (2) des Hintergrundbilds (B);
- Markieren solcher Pixel der Aufnahme (I), die innerhalb des Vordergrundbilds liegen;
- Bilden mindestens eines Objekts (O) durch Fügeverfahren; und

- Gruppieren von mindestens einem Objekt zur Entstehung eines segmentierten Bereichs (R).

3. Verfahren nach Anspruch 1 oder Anspruch 2, **dadurch gekennzeichnet, dass** der Pixelwert (1.1, ..., 1.N) der Aufnahme (I) und der Pixelwert (2.1, ..., 2.N) des Hintergrundbilds (B) als Farbmodell in Graustufen angegeben sind.

4. Verfahren nach einem der Ansprüche 1 bis 3, **dadurch gekennzeichnet, dass** der Pixelwert (1.1, ..., 1.N) der Aufnahme (I) und der Pixelwert (2.1, ..., 2.N) des Hintergrundbilds (B) als RGB Farbmodell mit drei Komponenten für jeden Pixel angegeben sind.

5. Verfahren nach einem der Ansprüche 1 bis 4, **dadurch gekennzeichnet, dass** der Akzeptanzgrenzwert (T) der Beleuchtungsänderung verbunden mit einer Änderung des Lichts Null beträgt.

6. Verfahren nach einem der Ansprüche 1 bis 5, **dadurch gekennzeichnet, dass** der Akzeptanzgrenzwert (T) der Beleuchtungsänderung verbunden mit einer Änderung des Lichts 0,7 beträgt.

7. Verfahren nach einem der Ansprüche 1 bis 6, **dadurch gekennzeichnet, dass** in einem vorherigen Verfahrensschritt die Aufnahme (I) einer Skalenänderung unterzogen wird, wobei die Skalenänderung die Pixelwerte mit höheren Intensitätswerten vergrößert.

8. Verfahren nach Anspruch 7, **dadurch gekennzeichnet, dass** die Skalenänderung, welche die Pixelwerte mit höheren Intensitätswerten vergrößert, einer kubischen Abhängigkeit von dem Pixelwert folgt.

9. Verfahren nach einem der Ansprüche 1 bis 8, **dadurch gekennzeichnet, dass** zur Korrektur von allen Pixelwerten einer beliebigen Kombination der folgenden Bilder:

- die Aufnahme (I);
- das Hintergrundbild (B);
- das zugeschnittene Bild (Z) der Aufnahme (I);
- das zugeschnittene Bild des Hintergrundbilds (B);

eine Korrektur subtrahiert wird, wobei die Korrektur dem Pixelwert eines der folgenden Bilder entspricht:

- der Beleuchtungsebene der Aufnahme (I); oder
- der Beleuchtungsebene des Hintergrundbilds (B); oder
- der Beleuchtungsebene des zugeschnittenen Bilds (Z) der Aufnahme (I); oder
- der Beleuchtungsebene des zugeschnittenen Bild des Hintergrundbilds (B).

10. Verfahren zur Detektion nach einem der Ansprüche 1 bis 9, **dadurch gekennzeichnet, dass** in dem Fall einer Detektion einer Beleuchtungsänderung in der Aufnahme (I) zu dem Aufnahmezeitpunkt t, das Verfahren zusätzlich die folgenden Verfahrensschritte umfasst:

- Bereitstellen eines Wachzeitintervalls,
- Erzeugen einer Vielzahl von Bildern (Fr.t+1, ..., Fr.W) im Anschluss an die Aufnahme (I) zum Aufnahmezeitpunkt t während des Wachzeitintervalls,
- Ausführen des Verfahrens zur Detektion von Beleuchtungsänderungen gemäß einem der Ansprüche 1 bis 10 für jedes der Vielzahl von Bildern (Fr.t+1, ..., Fr.W) im Anschluss an die Aufnahme (I) zum Aufnahmezeitpunkt t;
- Verwerfen der Detektion einer Beleuchtungsänderung zum Aufnahmezeitpunkt t als Beleuchtungsänderung, in dem Fall, dass sich die Detektion der Beleuchtungsänderung für eine Mehrheit der Vielzahl von Bildern (Fr.t+1, ..., Fr.W) im Anschluss an die Aufnahme (I) zum Aufnahmezeitpunkt t nicht wiederholt.

11. Vorrichtung für Bildverarbeitung, aufweisend:

- Bildeingabemittel;
- Datenverarbeitungsmittel; und
- Datenspeichermittel;

wobei die Datenverarbeitungsmittel dazu ausgelegt sind, das Verfahren nach einem der Ansprüche 1 bis 10 auszuführen.

**12.** Vorrichtung nach Anspruch 11, aufweisend eine Bilddatenschnittstelle zum Ausführen einer Kommunikation der Detektion einer Beleuchtungsänderung in einer Aufnahme (I).

**13.** Vorrichtung nach Anspruch 11, aufweisend ein Aufnahmemittel (41).

**14.** Videoüberwachungssystem aufweisend eine Vorrichtung nach einem der Ansprüche 11 oder 12 und eine Alarmvorrichtung.

**Revendications**

**1.** Procédé pour la détection de variations d'éclairage pour des systèmes de vision entre une image de détection (I) d'une région d'étude acquise à un instant de détection t, et une image de modèle d'arrière-plan (B) de ladite région d'étude, l'image de modèle d'arrière-plan (B) reflétant l'évolution temporelle de la région d'étude à un instant précédant l'instant de détection t,
dans lequel l'image de détection (I) comprend un premier ensemble de pixels (1) et l'image de modèle d'arrière-plan (B) comprend un second ensemble de pixels (2),
ledit premier ensemble de pixels (1) et ledit second ensemble de pixels (2) partageant un seul et même ensemble de N coordonnées de pixel ($r_1$, ..., $r_N$), et
une seule valeur de pixel du premier ensemble de valeurs de pixel (1) et une seule valeur de pixel du second ensemble de valeurs de pixel (2) étant associées à chaque coordonnée de pixel ($r_i$) de l'ensemble de coordonnées de pixel ($r_1$, ..., $r_N$),
ledit procédé comprenant la fourniture d'une valeur de seuil d'acceptation (T) de la variation d'éclairage, la valeur de seuil d'acceptation dépendant des conditions d'éclairage de la région d'étude, et
**caractérisé en ce que** le procédé comprend la séquence d'étapes suivante :

- sélectionner une région (R) segmentée au moyen de techniques de segmentation d'images numériques entre l'image de détection (I) et l'image de modèle d'arrière-plan (B), la région segmentée (R) reflétant un changement par rapport au modèle d'arrière-plan,
- déterminer une valeur de corrélation (C) entre les pixels dans la région segmentée (R) qui appartiennent à l'image de détection (I) et les pixels dans la région segmentée (R) qui appartiennent à l'image de modèle d'arrière-plan (B), sur la base de la valeur de pixel (1.i) de l'image détection (I) et de la valeur de pixel (2.i) de l'image de modèle d'arrière-plan (B) correspondant à une seule et même coordonnée de pixel qui appartient à la région segmentée (R),
- dans l'éventualité où la valeur de corrélation (C) est supérieure à la valeur de seuil d'acceptation (T), il est détecté qu'une variation d'éclairage s'est produite dans l'image de détection (I).

**2.** Procédé selon la revendication 1, dans lequel la sélection de la région segmentée (R) comprend les étapes consistant à :

- créer une image de premier plan sur la base de la valeur de la différence entre chaque valeur de pixel (1) de l'image de détection (I) et de chaque valeur de pixel (2) de l'image de modèle d'arrière-plan (B),
- étiqueter ces pixels de l'image de détection (I) qui se situent à l'intérieur de l'image de premier plan,
- former au moins un objet (O) au moyen de techniques de fusion, et
- regrouper au moins un objet (O) pour donner naissance à une région segmentée (R).

**3.** Procédé selon la revendication 1 ou 2, dans lequel la valeur de pixel (1.1, ..., 1.N) de l'image de détection (I) et la valeur de pixel (2.1, ..., 2.N) de l'image de modèle d'arrière-plan (B) est donnée par un modèle de couleur en échelle de gris.

**4.** Procédé selon l'une quelconque des revendications 1 à 3, dans lequel la valeur de pixel (1.1, ..., 1.N) de l'image de détection (I) et la valeur de pixel (2.1, ..., 2.N) de l'image de modèle d'arrière-plan (B) est donnée par un modèle de couleur RVB avec trois composantes pour chaque pixel.

**5.** Procédé selon l'une quelconque des revendications 1 à 4, dans lequel la valeur de seuil d'acceptation (T) de la variation d'éclairage associée à la variation de lumière est égale à zéro.

**6.** Procédé selon l'une quelconque des revendications 1 à 5, dans lequel la valeur de seuil d'acceptation (T) de la variation d'éclairage associée à la variation de lumière est de 0,7.

7. Procédé selon l'une quelconque des revendications 1 à 6, dans lequel, à une étape précédente, l'image de détection (I) est soumise à un changement d'échelle qui augmente les valeurs de pixel avec une valeur d'intensité plus élevée.

8. Procédé selon la revendication 7, dans lequel le changement d'échelle qui augmente les valeurs de pixel avec une valeur d'intensité plus élevée suit une dépendance cubique à la valeur de pixel.

9. Procédé selon l'une quelconque des revendications 1 à 8, dans lequel une correction est appliquée au moyen d'une soustraction sur toutes les valeurs de pixel de toute combinaison des images suivantes :

- l'image de détection (I),
- l'image de modèle d'arrière-plan (B),
- l'image tronquée (Z) sur l'image de détection (I),
- l'image tronquée sur l'image de modèle d'arrière-plan (B),

laquelle correction correspond à la valeur de pixel de l'une quelconque des images suivantes :

- le plan d'éclairage de l'image de détection (I), ou
- le plan d'éclairage de l'image d'arrière-plan (B), ou
- le plan d'éclairage de l'image tronquée (Z) sur l'image de détection (I), ou
- le plan d'éclairage de l'image tronquée sur l'image de modèle d'arrière-plan (B).

10. Procédé de détection selon l'une quelconque des revendications 1 à 9, dans lequel dans l'éventualité d'une variation d'éclairage détectée sur l'image de détection (I) à un instant de détection t, ledit procédé comprend de plus l'exécution des étapes suivantes :

- fournir un temps de garde,
- acquérir une pluralité d'images (Fr.t+1, ..., Fr.W) postérieures à l'image de détection (I) à l'instant de détection t pendant le temps de garde,
- exécuter la détection d'une variation d'éclairage selon l'une quelconque des revendications 1 à 10 dans chaque image de la pluralité d'images (Fr.t+1, ..., Fr.W) postérieures à l'image de détection (I) acquise à l'instant de détection t,
- rejeter la détection de la variation d'éclairage à l'instant de détection t en tant que variation d'éclairage, dans l'éventualité de la détection de la variation d'éclairage n'étant pas maintenue dans une majorité de la pluralité d'images (Fr.t+1, ..., Fr.W) postérieures à l'image de détection (I) à l'instant de détection t.

11. Dispositif pour des systèmes de vision qui comprend :

- des moyens d'entrée d'images,
- des moyens de traitement de données, et
- des moyens de stockage de données,

dans lequel les moyens de traitement sont configurés pour mettre en oeuvre le procédé selon l'une quelconque des revendications 1 à 10.

12. Dispositif selon la revendication 11, comprenant des moyens d'interface de données d'images pour mettre en oeuvre une communication de la détection d'une variation d'éclairage dans l'image de détection (I).

13. Dispositif selon la revendication 11, comprenant des moyens d'acquisition d'images (41).

14. Système de vidéosurveillance comprenant un dispositif selon les revendications 11 ou 12 et des moyens d'alarme.

FIG. 1

FIG. 2A

FIG. 2B

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040228530 A1

**Non-patent literature cited in the description**

- Digital Image Processing. **RAFAEL C. GONZALEZ ; RICHARD E. WOODS.** Pearson Prentice Hall. Pearson Education, Inc, 2008
- **C. STAUFFER ; W. GRIMSON.** Adaptative Background Mixture Models for Real-Time Tracking. *IEEE Conference on Computer Vision and Pattern Recognition,* 1999, vol. 2
- **YING-LI TIAN ; MAX LU ; ARUN HAMPAPUR.** Robust and Efficient Foreground Analysis for Real-time Video Surveillance. IEEE Computer Society Conference On Computer Vision And Pattern Recognition, 2005, vol. 1, 1182-1187
- **B. KLARE ; S. SARKAR.** Background subtraction in varying illuminations using an ensemble based on an enlarged feature set. IEEE Computer Society Conference on Computer Vision and Pattern Recognition Workshops, 2009, 66-73
- **OMAR JAVED ; KHURRAM SHAFIQUE ; MUBARAK SHAH.** A Hierarchical Approach to Robust Background Subtraction using Color and Gradient Information. Workshop on Motion and Video Computing, 2002, 22-27
- **A. MILLER et al.** Person and Vehicle Tracking in Surveillance Video. *LNCS,* 2008, vol. 4625, 174-178
- Object Detection under Varying Illumination Based on Adaptive Background Modeling Considering Spatial Locality. **T. TANAKA et al.** PSIVT. LNCS, 2009, vol. 5414, 645-656
- Non-parametric model for Background Subtraction. **AHMED M. ELGAMMAL ; DAVID HARWOOD ; LARRY S. DAVIS.** Proceedings of the 6th European Conference in Computer. Springer-Verlag, 2000, 751-767
- Robust Techniques for Background Subtraction in Urban Traffic Video. **CHEUNG, S. C. ; KAMATH C.** Video Communications and Image processing. SPIE Electronic Imaging, 2004